(19) Europäisches Patentamt

European Patent Office

Office européen des brevets

(11) **EP 1 755 090 A1**

(12) **EUROPEAN PATENT APPLICATION**

(43) Date of publication:
**21.02.2007 Bulletin 2007/08**

(51) Int Cl.:
***G07F 7/00*** *(2006.01)*

(21) Application number: **05107488.8**

(22) Date of filing: **15.08.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Adaxys SA**
**6850 Mendrisio (CH)**

(72) Inventor: **Humenthaler, Max**
**6865 Tremona (CH)**

(74) Representative: **Bremi, Tobias Hans**
**Isler & Pedrazzini AG**
**Gotthardstrasse 53**
**Postfach 6940**
**8023 Zürich (CH)**

(54) **Device for identification and verification of items with refundable deposit**

(57)  A device (101, 102) for identification and/or verification and/or sorting and/or refunding of items with refundable deposit such as glass or plastic bottles, cans and the like, is proposed. The device is comprising an opening (118) into which the item can be inserted, first means (10, 118) for identification and/or verification of the inserted item, wherein these first means are based on magnetic (10), electromagnetic and/or optical (118) methods, and comprising second means for either indicating the amount of refund or for direct refund of money. High efficiency in identification and/or verification can be provided in a relatively small device in that the item is introduced through the opening (118) into a substantially vertical, tube like cavity (106), and in that third means (107) are provided allowing to rotate the item along a principal axis of the tube like cavity (106) in at least one step of the identification and/or verification process. Preferentially concomitantly magnetic and optical means are provided on the item and are provided as first means in the device, and even more preferentially the magnetic means allow to read out and mark the item as having been refunded for increased security.

Fig. 2

**Description**

TECHNICAL FIELD

The invention relates to a device for identification and/or verification and/or sorting and/or refunding of items with refundable deposit such as glass or plastic bottles, cans and the like. In particular relates to a device comprising an opening into which the item can be inserted, first means for identification and/or verification of the inserted item, wherein these first means are based on magnetic, electromagnetic and/or optical methods, and comprising second means for either indicating the amount of refund or for direct refund of money. The invention also relates to a method for identification and/or verification of items with refundable deposit preferably using such a device.

BACKGROUND OF THE INVENTION

In view of ecological considerations circulating items, in particular containers for food and beverages like bottles, cans and the like, shall be recirculated either for repeated use or for recycling of the material of the items.
While in some cases and countries such recycling works without any specific financial incentives for those returning the items, recycling can heavily be supported by attributing refundable deposits to these items. So for example in Germany glass as well as PET bottles have to be sold and taken back with a refundable deposit by law.
However, there is many problems associated with refundable deposit, such as controlling whether the seller has actually charged the deposit when selling the item and has contributed this deposit to a pool from which collecting organisations, which pay out the deposit to the consumer, can reclaim this deposit upon return of the item. Furthermore, it would be desirable to be able to mark an article for which the deposit has already been refunded. Another problem is the fact that very often the items with refundable deposit are dirty and in bad shape when returned so that the classical way of marking such items by means of barcodes is rendered impossible. This is just one way of cheating such a system, others include providing false barcodes, removing items after identification but before ejection from corresponding collection devices, etc.
In view of supporting these ecological efforts and at the same time making sure that no cheating is possible, there is an increasing need for ways of marking items with refundable deposit as well as for devices allowing to collect such items in a safe and reliable manner.

SUMMARY OF THE INVENTION

The objective problem underlying the present invention is therefore to provide an improved device and an improved method for the verification and/or identification of items with refundable deposit. It therefore relates to a device in the field of recycling of glass bottles, PET bottles and the like.
The present invention solves the above problem by providing a device for identification and/or verification and/or sorting and/or refunding of items with refundable deposit such as glass or plastic bottles, cans and the like, comprising an opening into which the item can be inserted, first means for identification and/or verification of the inserted item. These first means are based on magnetic, electromagnetic and/or optical methods, and the device is further comprising second means for either indicating the amount of refund or for direct refund of money. The device is specifically characterised in that the item can be introduced through the opening into a substantially vertical, tube like cavity, and in that third means are provided allowing to rotate the item along a principal axis of the tube like cavity in at least one step of the identification and/or verification process.
The object of the present invention is therefore a device according to claim 1, as well as a method according to claim 15 .
One key feature of the invention is therefore the fact that the scanning of either the magnetic, the radio frequency or preferentially of the optical identification means on the item is simplified by providing a rotation of the item within the tube like cavity.
In a first preferred embodiment of the present invention, the tube like cavity is tilted from the vertical direction by no more of 30°, preferentially by no more than 5°. This, ideally fully vertical orientation of the tube like cavity allows to remove the item after the identification or verification process from the tube like cavity without additional means just by gravity. To this end preferentially below the tube like cavity there is provided a sorting mechanism in a lower part of the device.
According to another preferred embodiment the first means comprise at least one optical detection device, preferentially in the form of at least one optical barcode reader, and at the same time comprise at least one magnetic or electromagnetic detection device, preferentially in the form of a radio frequency or magnetic excitation in combination with a radio frequency or magnetic detection. Usually optical means of detection, i.e. generally barcode reading, is hampered by modified, dirty or wet tags/markings on the items to be checked. Therefore it is advantageous to provide in addition to the optical detection a radio frequency or magnetic excitation. One possibility is the provision of a so-called RFID-tag, preference is however given to the provision of a so-called bi-stable magnetic microwire provided on a magnetic substrate on the item, the status of which can be read and modified. In this context, a reference is made to the disclosure of WO 02/082475, in which such microwires are described in much detail as pertains to their production and their properties. The disclosure of this document shall be included with respect to the specifics of the microwire explicitly.

A further preferred embodiment is characterised in that the magnetic or electromagnetic detection device can be used for detecting the refund status of the item as well as for amending the refund status of the item. This means that after having found that the deposit of the item has not yet been refunded, it is possible to modify the item before storing it in some container such that it may not be used for another refund. Such a modification can either be carried out in that in case of a RFID-tag on the item, the radio frequency resonance behaviour is amended or fully destroyed, or the magnetic behaviour of an identification tag of the type of the above-mentioned microwire on a magnetic tape on the item can be modified, all this while the item is in the tube like cavity.

A particularly advantageous construction is possible, which only needs a very small height and which therefore for example can also be used on a table, if the first means are mounted in the device such as to be travelling in a direction parallel to the principal axis of the tube like cavity for scanning the item, wherein preferentially they can be moved by at least 0 - 400 mm preferably 10- 400 mm, e.g. 100 - 300 mm in said direction. While conventionally for scanning in these applications the item is moved, the motion of the first means proves to be space saving and very efficient. Preferably, this motion is used for the optical detection process, and for this optical detection process, preferably not only one but at least two barcode readers are provided, the reading direction of which are preferably oriented at different angles, for example at right angles with respect to each other.

A particularly advantageous construction is possible, if at least one optical detection device as well as at least one magnetic or electromagnetic detection device, the latter comprising at least one coil around the tube like cavity, are mounted on a common unit which can be moved in a direction parallel to the principal axis of the tube like cavity.

It is pointed out that the specific type of device for magnetic or electromagnetic detection as well as possibly magnetic or electromagnetic writing device around the tube can also be applied without optical detection device. Such a magnetic or electromagnetic device, in particular if it is structured as given below with several different excitation and pick up coils in specific geometric arrangement, may also be used in horizontal arrangement, and is not limited to the substantially vertical arrangement as given above.

In particular in case of the use of a microwire on the item, it proves to be advantageous if the first means comprise at least one coil type winding around the tube like cavity. Preferably in this case the first means comprise at least one driving coil and at least one detection coil, wherein for example a stacked pair of spaced driving coils is provided in the gap of which the detection coil is arranged symmetrically with its axis coinciding with the axis of the pair of driving coils. By means of this geometric arrangement of excitation or driving and detection or pick up, optimally homogeneous excitation and optimally sensitive detection is made possible.

Differential measurements eliminating background noise and enhancing the sensitivity of the measurement are possible if the first means comprise two stacked pairs of driving coils connected in series, in the gap of each of which a detection coil is arranged symmetrically with its axis coinciding with the axis of the driving coils. The signals picked up by the detection coils can then be subtracted from each other, filtered appropriately and fed through an analogue digital converter for further data analysis.

Particularly sensitive measurements are possible if the tube like cavity has a radius (in the above applications typically in the range of 50 mm) which is approximately equal to the spacing of the stack formed by the pair of driving coils along the magnetic axis and preferentially the enclosed detection coil has a height in the same range, i.e. just fitting between the two driving coils. Preferentially, the tube like cavity has a radius of 40-70 mm.

In order to be able to modify the tag in the form of a microwire, it is advantageous to provide a driving coil with a geometry and a robustness and an input such that it can also be used as degaussing coil, for example by a ringing pulse.

As already mentioned above, for further analysis of the data of the magnetic device on the item, it is appropriate to provide digital and/or electronic amplification and filtering means for the signals detected in the detection coil(s), wherein preferentially the measurement in the detection coils is provided as a differential measurement of the signals received in the pair of detection coils.

A particularly simple construction of the device is possible if the third means are provided as a rotatably mounted turntable, preferably with a diameter substantially identical to the diameter of the tube like cavity. The turntable can be mounted such that for removal of the item from the tube like cavity it can be moved in a substantially sideways motion such that the tube like cavity is opened towards the bottom side and the item allowed to drop into a lower unit of the device, either by means of gravity or by a motion initiated mechanically or by air pressure. In the alternative, it is also possible to provide a mechanism in which the turntable is tilted to open the tube like cavity.

Preferentially, the device comprises an upper part for identification and/or verification and/or refunding as well as a lower part for sorting, wherein the item is transported from the upper part to the lower part by means of gravity. This modular design simplifies construction and allows variable use and individual replacement .

Furthermore, the present invention relates to a method for the identification and/for verification and/or refunding of items with refundable deposit. The method is characterised in that the item with refundable deposit is in a first step inserted into through an opening into a tube like, substantially vertical cavity of the device, in the second step the admissibility to refunding is checked by electromagnetic or magnetic interaction with a tag on the item by first means, in the third step the identification and/or verification of the inserted item is checked by the first means using optical methods, preferentially by barcode reading, whereby the item is rotated along the main axis of the tube like cavity, preferentially with a frequency of rotation in the range of 0-100, preferably 1 - 100, even more preferably 40 - 60 rotations per minute, and in a fourth step subsequently second means are either indicating, transmitting or printing out the amount of refund or in case of direct refund outputting the corresponding amount of money.

According to a first embodiment of this method according to the invention, after having checked the admissibility to refunding, in the event that admissibility to refunding is acknowledged, the tag is modified by electromagnetic or magnetic interaction such as to mark the item as having been refunded, wherein preferentially said modification is carried out by either applying a strong electromagnetic field for destruction of a resonance circuit in the tag or for amending the magnetic properties in the tag (e.g. degaussing of microwire).

Another preferred embodiment of the method is characterised in that in the step of identification and/or verification of the inserted item the first means are moved along the principal axis of the tube like cavity in a scanning motion.

Preferably, the method is carried out using a device as described further above and in particular using a device as specifically described below.

Further embodiments of the present invention are outlined in the dependent claims.

SHORT DESCRIPTION OF THE FIGURES

In the accompanying drawings preferred embodiments of the invention are shown in which:

Fig. 1 shows a perspective view of a device for identifying and/or verifying items with refundable deposit, wherein a) displays a front view and b) displays a back view;

Fig. 2 a) shows a central cut parallel to the front wall through a device equivalent to the one as displayed in figure 1 and b) a schematic side view with covers removed;

Fig. 3 shows a block diagram of the functionalities and elements of a device according to the above figures;

Fig. 4 in a) shows the voltage response induced in the receiving coils and in b) shows a schematic central cut through the coil arrangement ;

Fig. 5 in a) shows a schematic view of the driving circuit and in b) shows a schematic view of the amplifying-filtering circuit, in c) a schematic view of the selector circuit and in d) the output of the selector circuit;

Fig. 6 in a) shows the PTC circuit diagram, and in b) the typical curve of the demagnetisation current;

Fig. 7 in a) shows the RLC resonance circuit, in b) shows the decay of the magnitude of the current waveform and in c) shows the degaussing circuit;

Fig. 8 shows a) the magnetisation loop of bi-stable microwire, b) the voltage pulse generated at remagnetisation of a microwire;

Fig. 9 shows in a) a magnetic marker comprising microwire attached to a recorded tape, in b)-i) various voltage signals of microwires (see further below);

Fig. 10 shows the system diagram for the signal generation;

Fig. 11 shows the circuit diagram for the amplifier designed to drive inductive and capacitive loads.

DETAILED DESCRIPTION OF THE PREFERRED EMBODIMENTS

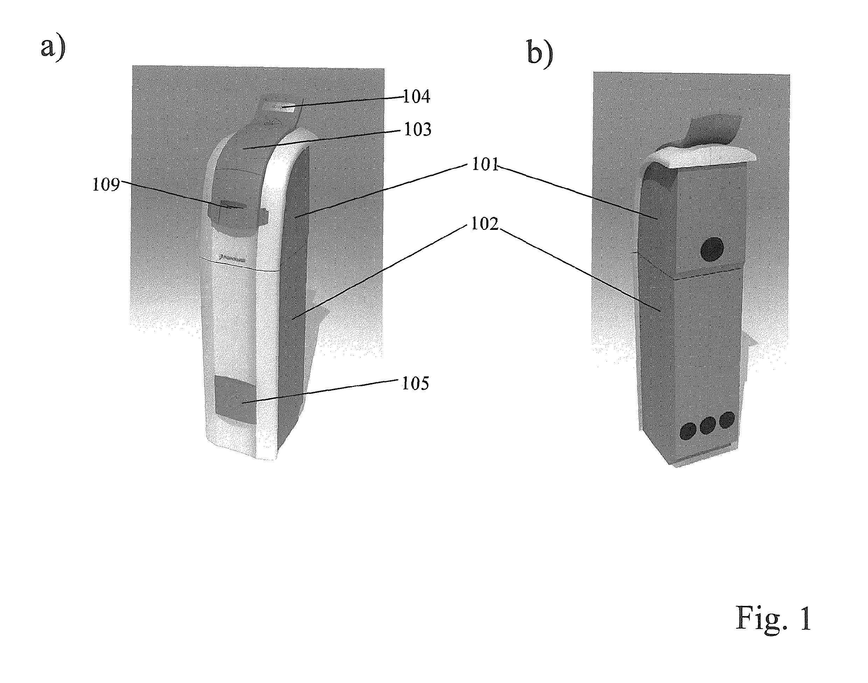

Referring to the drawings, which are for the purpose of illustrating the present preferred embodiments of the invention and not for the purpose of limiting the same, figure 1 shows a perspective view of a full device for identifying, verifying and refunding of items with refundable deposit.

The device comprises an upper part 101 and a lower part 102. Basically the upper part 101 is there for identification and verification as well as optionally for marking the item that the deposit has been refunded and it comprises most of the electronics. The lower part 102, which is optional (the device with only the upper part may also be put on a table), is there for sorting the items which have been identified, verified etc in the upper part 101. The items are moved from the upper part into the lower part by means of gravity, they may however also actively be moved. The design of the device may of course also be different, usually however on the upper part there is provided a cover 103 which covers an input opening 108 (not visible in figure 1), which serves to input the items to be verified.

There is also provided a display 104, e.g. an LCD display, which can be used for displaying information about the item or a series of items introduced into the device sequentially. So it may for example be used for indicating the sum of refund which the user finally will get. Furthermore the device is provided with an output slot 109, or also an output pocket, which may either directly output the money for the refund or which may, in the alternative, output a ticket which can be changed to money at a counter. Depending on the sorting process, there may also be provided an output opening or output flap 105 for items which have been identified as non-acceptable.

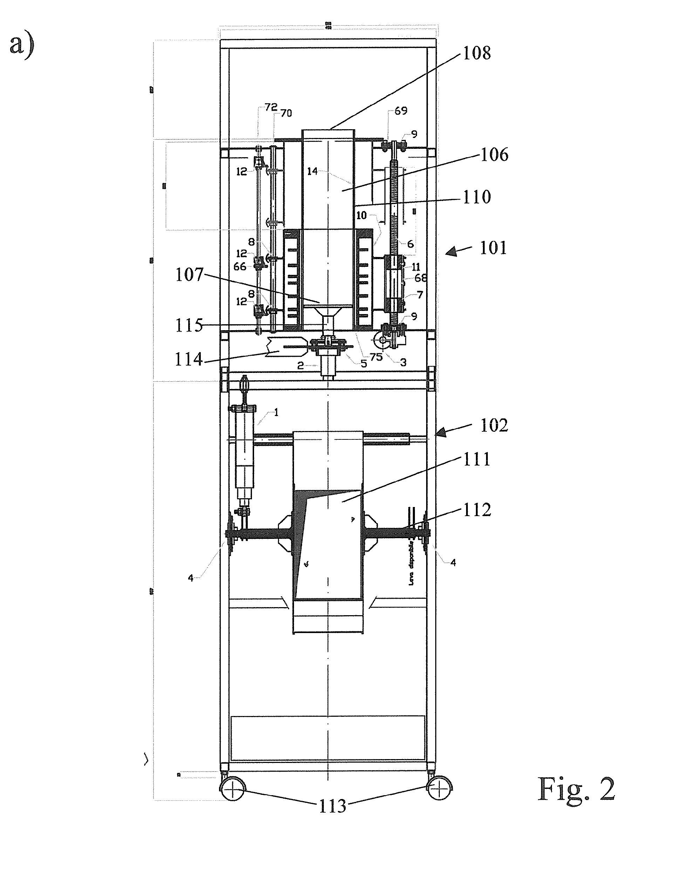

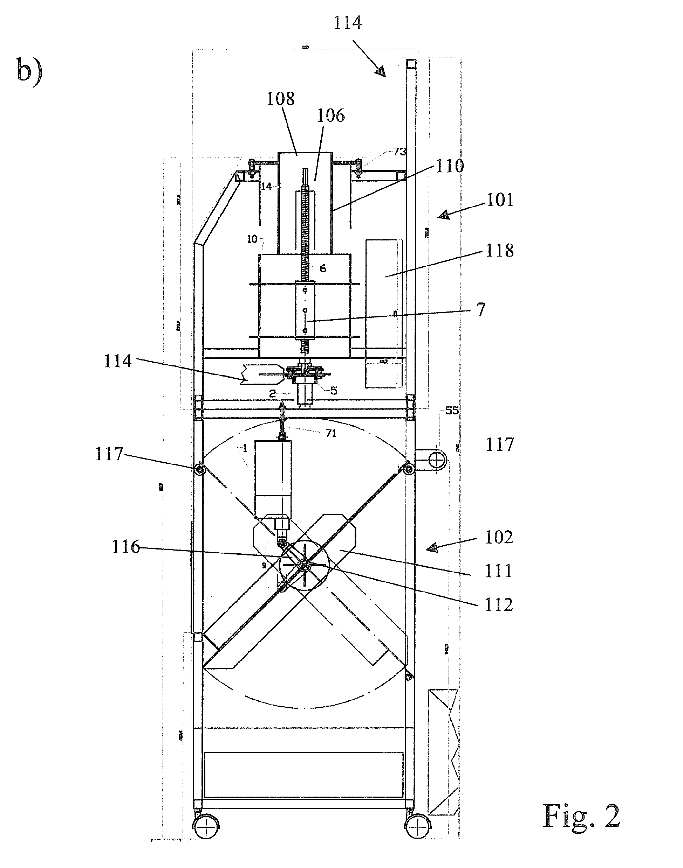

Figure 2 a) shows a central cut parallel to the front wall of the device according to figure 1 which also goes centrally through the opening into which the items to be verified are introduced. The upper part 101 comprises a centrally located tube 110, the cavity 106 of which takes up the item for identification and verification. The cavity 106 is open to the upper side by means of the input opening 108. The cover 103 is not displayed in figure 2. The tube 110 is preferentially arranged with its principal axis in a vertical direction, it may however also be somewhat tilted with respect to the vertical axis, however preferentially by no more than 30°. The bottom of the tube 110 is bordered by a turntable 107, which is rotatable parallel to the principal axis of the tube 110. The turntable 107 is mounted on a pillar 115 which is provided on a mounting 2. There is provided a bearing 5 for the turntable 107 and the turntable is rotated in certain steps of the verification/identification by means of a drive 114. The drive may either be provided as a motor and located as indicated by the reference numeral 114 in figure 2a) it may however, for reasons of prevention of disturbance of the radio frequency parts, be provided as a motor which is located further away driving the turntable for example by means of a driving belt or toothed belt. As displayed in figure 2 however, the drive of the turntable is realised within the mounting 2.

Furthermore in the upper part around the tube 110 there is provided a cylindrical coil unit 10. The details of this cylindrical coil unit will be specified further below. The coil unit is arranged concentrically to the tube 110 and as close as possible to the outer wall of the tube. It is also possible that the inner wall of this cylindrical coil unit forms this section of the tube 110.

As one can see from figure 2b) there is also provided an area 118 for optical detectors. Typically the optical detectors are provided as barcode readers. To make sure that any bar-code in any position can be safely read, preferentially at least two or, or three such barcode readers are provided, wherein they are preferentially oriented orthogonal to each other or under a various different angles.

So in the upper part 101 there is provided the coil unit 10 as well as the optical detectors 118 both used for identification/verification/changing the status of the item. Preferentially both, i.e. the coil unit 10 as well as the optical detectors 118, are mounted in the upper part 101 in a way such they are vertically movable. This is made possible by means of a vertical screw 6, which is mounted vertically (or rather parallel to the axis of the tube in case of a tilted tube) and rotatably in this upper part 101. The devices 10 and 118 are connected with this screw 6 by means of a traveller 7, which is provided with at least one threaded region 11 fitting onto screw 6. For further guidance or positioning of the devices there is preferentially provided at least one or two guiding pillars 71 on which guidings connected to the devices are sliding. Additionally there is provided a pillar of 72 for sensors or positioners 12 for bordering the possible motional range of the devices 10 and 118.

If the screw 6 is rotated, which is possible by means of a corresponding drive 3 preferentially provided on the lower end of the screw, the whole analysis unit comprising the devices 10 and 118 can be moved up and down in a range as allowed by the positioners 12. The driving may either be provided by a direct motor, it may however also be provided by means of a worm gearing and again a motor which is located further away in order to avoid disturbance of the radio frequency action of the device 10.

The lower part 102 basically serves for sorting the items which have been identified/verified/amended in the upper part 101. To this end, there is provided a flap 111, which can be moved between a first position and a second position, and depending on the position the item will either be moved towards the front side (position displayed bold in figure 2b) and will be ejected through the opening 105, this being the case if the item is rejected as non-refundable, or it will be moved towards the backside and for example be introduced into an appropriate container. Further means for sorting different types of refundable items may be provided as well. The flap 111 is mounted on a horizontal axis 112, and by means of a lever 116 and an associated drive unit 1, the flap can be moved between those two positions.

In figure 2 the electronics and the controlling elements are not indicated. However there is provided a circuit board comprising on the one hand all the controlling for the devices 10 and 118 and for analysing the data, as well as for generating control signals for the mechanical parts so for the drive of the turntable 107, for the drive of the screw 6, as well as for the drive for the flap 111. It has to be noted that in order to avoid magnetic and/or electromagnetic disturbances of the radio frequency action of the unit 10 it should be made sure that any power supply unit or other electric, electronic, or metal part generating or collecting magnetic or electromagnetic fields is located as far away as possible from unit 10. So for example power supplies for the drives and the like are either located in the lower part 102 or in edge regions of the upper part.

The general process for an item to be treated by the device is carried out as follows. The item, e.g. a bottle, can, etc, is introduced into the device by means of the opening 108. It falls into the tube 110 to abut onto turntable 107. As soon as the item arrives there, the item, which is provided with magnetic identification means (bi-stable magnetic microwire on magnetic tape, see description further below) as well as optical identification means (barcode) it is identified magnetically by means of the coil unit 10. If the coil unit 10 detects a signal corresponding to the information that the item has not yet been refunded, this will be registered, and in the next step the magnetic identification means will be modified to mark the item as having been refunded.

In a next step, the turntable starts rotating (typically with a frequency in the range of 0 - 100, typically around 50 rotations per minute), and at the same time the detection unit comprising the coil unit 10 as well as the optical detectors 118 is moved upwards by means of rotation of screw 6 until the barcode is read. In this step is possible to go for several up-and-down motions of the unit if the barcode can only difficultly be read. After this identification the item is then released downwards either by moving the turntable in a sideways motion (to this end an additional drive is provided, which, in case the drive for the rotation of the turntable is realised at the position indicated with reference numeral 2, may be provided at the position indicated with reference 114, providing a sideways motion of the whole unit given by the elements 107, 115, 5, 2) or by tilting it. The item falls down and will be sorted by the flap 111 as described above.

It has to be pointed out that the advantage of the combination of magnetic (or in the alternative radio frequency, i.e. e.g. RFID) identification means and optical identification means on the one hand allows to identify and subsequently modify the item to market as having been refunded (magnetic means), and that the optical means allows to identify it and to track back whether the initial seller of the item has actually paid for the amount to be refunded. The proposed mechanism therefore provides a double security. Furthermore, in case the optical means cannot be read (dirty tag etc), there is always the possibility of magnetic identification, since this means is independent of humidity, dirt etc.

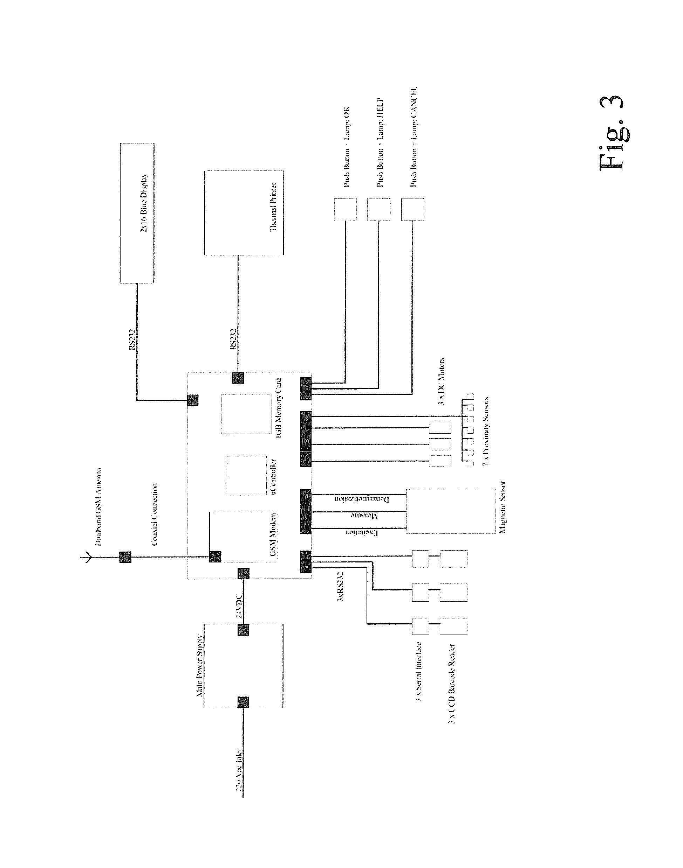

As can be seen from the schematic diagram displayed in figure 3, there is additionally provided proximity sensors in order to detect an item to be present in the tube, there is provided three CCD barcode readers, there is provided a controlling and data processing unit for the coil unit 10, wherein the coil unit is at the same time used for excitation, measurement and for demagnetisation of the magnetic means on the item, there is provided a main power supply, a data connection for verification and feedback for the optically detected barcode (GSM module), there is provided means for storing data, and additionally there is provided means for outputting tickets stating the amount to be refunded for example at a counter. Furthermore push buttons for a various functions are provided.

**Detailed description of the coil unit 10 and the magnetic labels**

The full system includes driving and pick up coils, signal generation electronics and detection electronics. The coil system dimensions must be carefully calculated to ensure that the driving coils produce the needed volume of the uniform magnetic field of sufficient magnitude. The detection coils are of balanced type with the inductance value to minimise the "ringing effect". The processing electronics is based on three main circuits: driving circuit, amplifying-filtering circuit and identifying circuit. The details are given in Section 1 below. Specification on the deactivation coils and related electronics: The deactivation of the wire-on-tape label can be realised by supplying an alternating magnetic field of the initial intensity exceeding the tape coercivity which is about 300 Oe, and gradually decaying this intensity. To produce such a high field it is be needed to specially design coils which can safely carry high current in the range of 10-15 A supplied from mains. The diameter of the wire in such a coil should be about 3mm including insulation. It should be noted that with a proper design in the form of a Helmholtz coil the same coils can be used for magnetising the wire and degaussing. To achieve the decay in the intensity of the ac magnetic field, two techniques are proposed.

The first one is based on PTC thermistors. However, it appears that this method will only partly suitable for the intended application where it will be required an identification of an object on a regular basis, for example around once every 30 seconds. Then, it proves to be difficult to realise cooling of the thermistor to normal condition in a short amount of time.

A general practice in degaussing technique is to use a sort of inductive discharge. In this method a large current pulse initially introduced in the system will ring under the natural effects of the inductance of the coil to produce the degaussing effect. The basic operation of such a system is to charge a capacitor, then simply discharge the current into the coil, the transient will "ring" in the inductor and produce an AC current that will decrease exponentially. The details (including safety conditions) are given Section 2 below.

Specification on the microwire properties and delivery of two types of microwires and microwire/tape systems with distinguishable switching characteristics: Magnetic labels typically involve a magnetic element having fast magnetisation switching between the two stable positions, which generates harmonically rich voltage pulse.

In this context of the bi-stable magnetic microwires, the disclosure of the document WO 02/082475 shall explicitly be included into this specification, as pertains to the making, the dimensions, properties and the functioning of such microwires.

An amorphous magnetic wire with glass coating can possess such a property depending on composition (for example, CoFeMnSB family), internal microstructure, geometrical parameters, and certain technological regime. A very important property is the possibility to produce wires with different switching characteristics. Local stray fields imposed by a conditionally magnetised magnetic substrate create different switching conditions along the microwire, and hence, can characteristically modify the induced voltage at remagnetisation converting it from a single pulse to multi pulse waveform. By providing an associated magnetic substrate is therefore possible to generate a fingerprint like marking. Section 3 gives information on general bistable magnetic properties of wires, the effect of semi-hard magnetic substrate with a predetermined magnetisation pattern on the switching characteristics and discloses two systems of wire/tape in which the tape is magnetised with 5 mm pattern and wires have a coercivity of about 60A/m and 35A/m.

Experimental setup for investigating switching parameters of magnetic tags comprising microwire and high coercivity (~3000e) magnetic substrate as $\gamma Fe_2O_3$ magnetic audio tape: A dedicated experimental setup essential to fully characterise the tag response characteristics is been built. The setup includes Helmholtz coils of 50 or 75mm radius with 400 turns and a transfer function of 1A to 45.14 Oe (3611 A/m), a signal generator with a specially designed power amplifier to drive the Helmholtz coils, a set of small balanced pick up coils with optimised inductance to minimise the "ringing" effect, and data analysis based on reconstruction intrinsic BH-loops. The details are given in Section 4.

Tape writing system: Two principle ways to encode the magnetic tape have been investigated. One of them consists of producing a definite magnetic pattern on the magnetic tape with a system in which the inductive writing head driven by the pulse generator is adjusted closely to the tape surface, the tape is rotating on the wheel with a constant velocity. The wavelength ($\lambda$) or density of the written transitions on the tape is determined by the pulse frequency (f) from the signal generator and the velocity (v) of the tape travel, where $\lambda = v/f$. An MR read head is used to display the recorded data and confirm the written code. A Sony dictation cassette recorder TCM -939 is been modified to record transitions onto the $\gamma Fe_2O_3$ audio tape. This allows us to produce recorded tapes with different magnetic patterns continuously on commercially available tape cassettes (about 250 m).

The other method is to use a permanent magnet locally to magnetise the tape. We have found a very simple method of using thin magnet of about 2-5mm placed in the middle of 20 mm wire-on-tape sample to produce two opposite domains in the central position. This method is feasible to use at a production stage and it gets very stable two voltage pulses.

*Section 1: Detection of magnetic labels incorporating magnetic wires with fast magnetisation switching*

1.1 Induced voltage signal in magnetic microwire systems

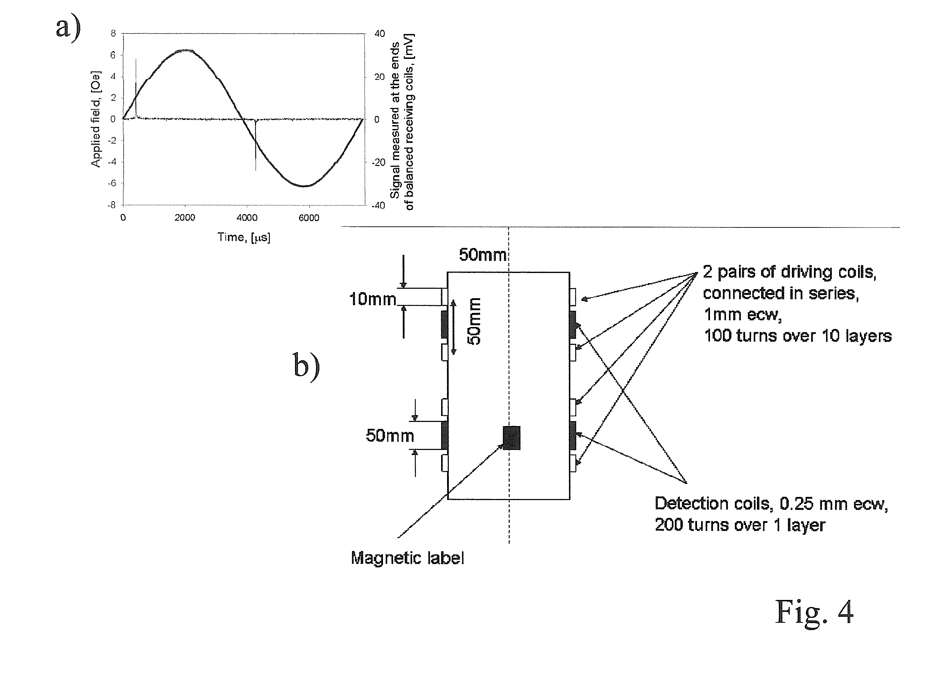

Due to very fast remagnetisation process (large Barkhausen effect), the wire-element produces a particular response to an applied magnetic field. If the voltage response is detected during this process in pick-up coils wound around the wire it will consists of the series of sharp peaks, as shown in Figure 4a) for wires of the composition $Fe_{60.1}Co_{12}Mn_{3.9}B_{12}Si_{10}$. Figure 4a) shows the voltage response induced in the receiving coils when $Fe_{60.1}Co_{12}Mn_{3.9}B_{12}Si_{10}$ wire is placed in a alternating (e.g. sinusoidal or trapezoidal) external field. Wire diameter is 21.4 $\mu$m and glass thickness is 2.8 $\mu$m.

There is a number of alloy systems that exhibit well-defined bi-stable behaviour characterised by different switching fields. For details, see Section 3 Bistable microwire properties.

1.2 Coil system

Figure 4 b), giving the schematics of the coil system 10, illustrates the concept for 1-D interrogation system. Such a system can operate with one wire in the interrogation volume, whose orientation is in parallel with the filed direction. The magnetic tag is excited by the magnetic field produced by four transmitting coils. The transmitting coils are electrically connected in series and their arrangement is similar to a Helmholtz configuration such that in the middle of each pair the generated field can be regarded as uniform.

Each coil comprises 100 turns wound over 10 layers with 1mm diameter enamelled copper wire (ecw) and is a short solenoid 10 mm long and 100 mm in diameter. The combined inductance of the coils is estimated to be 11 mH (with 15 % accuracy). The coils are separated a distance nearly equal to their radius (50 mm) apart along their magnetic axis. The important feature is that the magnetic field produced around the wire label which is placed between one pair of coils should be substantially uniform. Ideally, the wire should be in the middle as shown in the diagram. Regarding the label position, a different coil system or positioning could be required. The peak field produced by coils in the central part is about 4.1 Oe (328A/m) when the coil current is 0.2 A (peak amplitude), which would be sufficient to remagnetise the proposed wires. An additional circuit might be needed to demagnetise the magnetic substrate. It should produce a large impulse current inducing a field in the range of 300-400 Oe at the tag position.

The receiving coils are arranged such that their magnetic axis (defined as the vector along which an impinging magnetic field vector produces maximum electromotive force - emf) is aligned to the magnetic field direction. Each receiving coil comprises a short solenoid coil. The receiving coils are 100 mm in diameter and 50 mm long having 200 turns (one layer) of 0.25 mm diameter enamelled copper wire (ecw). The receiving or pick-up coils have approximately 2.2 mH inductance.

The operation of the receiving coils is as follows. The receiving coils are designed such that in the presence of the transmit magnetic field, the emfs produced by receiving coils are equal and opposite. That is why the driving coils have an additional pair. Such an arrangement is referred to as differential or balanced. The methods may include varying the turn's ratio between the coils, slight distortions in the enclosed coil area or very small orientation changes. When a magnetic material is placed inside one of the receiving coils, its property of permeability causes the magnetic field flux lines to link with the material. The effect is to cause more flux to flow inside the coil than would be the case with no magnetic material. The coil output emf is proportional only to the ratio of change of linked flux, whilst being insensitive to the transmitting magnetic field. Certainly, perfect balancing is difficult and this imperfection should be recovered electronically.

All scanning system should be covered by soft magnetic shield.

1.3. Processing electronics

An analogue Reader contains three different circuits: driving circuit, amplifying-filtering circuit and identifying circuit.

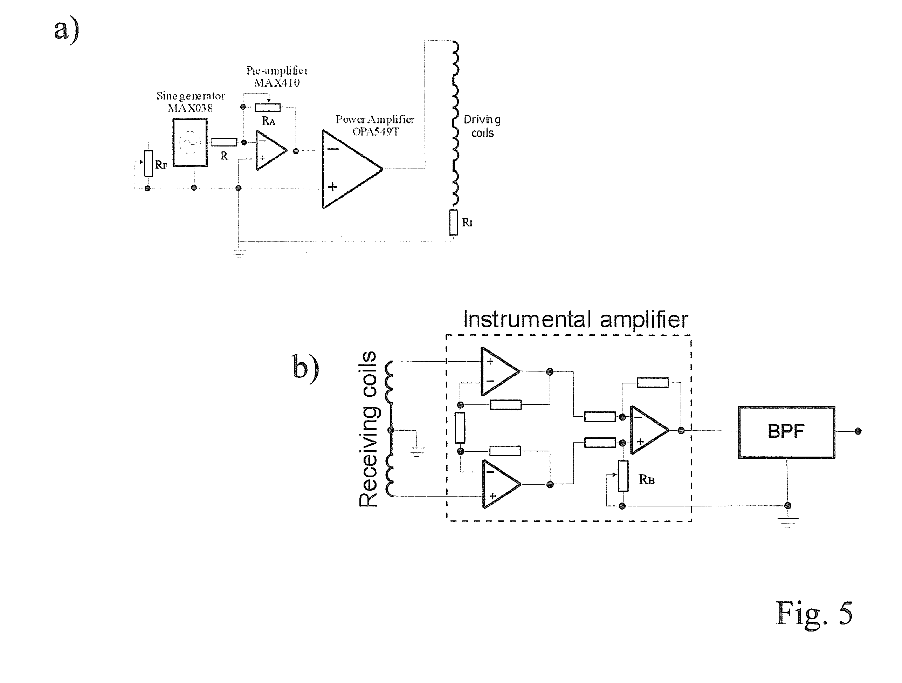

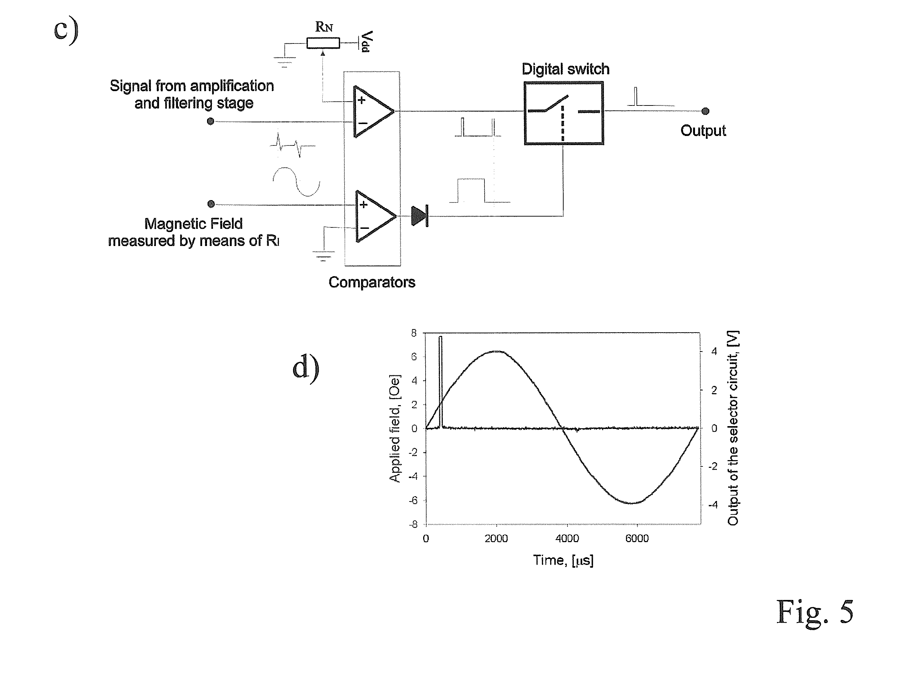

The driving circuit is schematically shown in Fig. 5a). It operates as follows. A sine generator (microchip MAX038 was used) generates a 1 to 100 kHz preferably up to 1 kHz (e.g. 200-250 Hz) signal. A pre-amplifier (microchip TL081) is used for adjusting the amplitude of the signal applied to the transmitting coils by adjusting value of the variable resistor RA. The high power amplifier (chip OPA549T) provides the drive for the transmitting coils. The drive current is set to achieve the appropriate transmitting field level and should be in the range of 0.2A peak value (measured by means of RI).

The amplifying-filtering circuit is given in Fig. 5 b).

The balanced receiving coils are connected to the amplifying and filtering electronics. The receive coils are designed such that in the presence of the transmit magnetic field, the emfs produced by them are equal and opposite. However, it is quite difficult to achieve the full compensation only by mechanical means. The variable resistor RB is used for compensating residual distortion. The band-pass filter (BPF) removes the residual low frequency distortion in the transmitter as well as the low frequency distortions in the receiver caused by unwanted receive coil imbalance or any other magnetic materials placed in the interrogation volume. The filter also limits high frequency noise, whose sources are thermal, electronic (amplifier), and interfering ac magnetic signals. The optimum performance would be limiting the receiver by the thermal noise from the receiver coils, whereas the outside interference is screened. In addition, it is desirable that the receiver bandwidth is matched with the characteristics of the tag element impulse response induced by the transmitter. In practice, a high-band of the filter set at 25 kHz is an efficient compromise. The amplification and filtering boards also contain so-called selector circuit shown in Fig. 5c). It is designed for eliminating negative pulses and to modify the positive pulses into squared ones, which will be used as strobe signal for running following digital electronics. At the output of this circuit only positive pulses at the positive portion of the sine waveform are appearing as it illustrated in Fig. 5 d). However, a different principle of reading can also be used, which will depend on final requirements.

*Section 2: Deactivation of magnetic marker- magnetic wire on semi-hard magnetic substrate.*

The deactivation of the wire-on-tape label can be realised by supplying an alternating magnetic field of the initial intensity exceeding the tape coercivity which is about 300 Oe, and gradually decaying this intensity. To produce such a field it will be needed to specially design the coils which could safely carry high current in the range of 10-15 A supplied from mains. The diameter of the wire in such a coil should be about 3mm including insulation.

It should be noted that with a proper design in the form of a Helmholtz coil the same coils could be used for magnetising the wire and degaussing.

To achieve the decay in the intensity of the ac magnetic field, two techniques are proposed.

· PTC thermistors

· Inductive discharge

2.1. PTC Thermistors

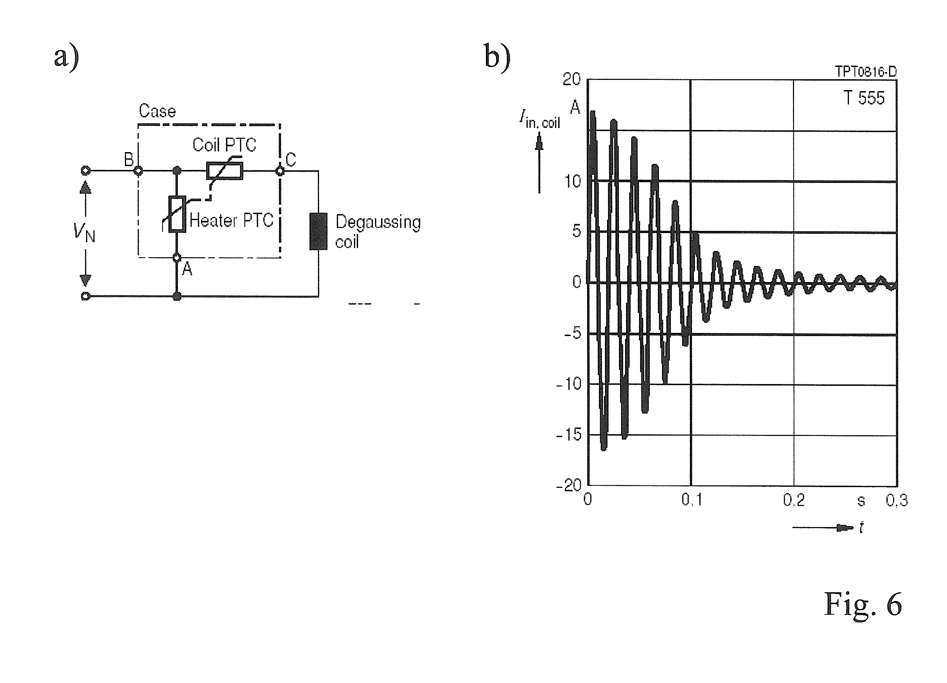

As the current flowing through the thermistor heats it, increasing the resistance, the current reduces. Therefore the initial large sine wave of current reduces with some near exponential transfer function. The principle circuit diagram is shown in Fig. 6 a), giving a PTC circuit diagram. The current waveform is shown in Fig. 6 b), giving the typical curve of demagnetization current $I_{in}$, coil measured at VN, coil resistance: 4,5 $\Omega$ (T 555), ambient temperature: 25 °C.

This is a developed technique. However, it appears that we sometimes there is a problem using PTC thermistors for degaussing. In the intended application, it will be required the identification of an object on a regular basis, for example around once every 30 seconds. Then, one have to find a means of reducing the temperature of the thermistor to normal (reduce down from high resistance state) in a short amount of time. In monitors the ratio is around 1 sec of operation for around 30 minutes of cooling time, or 1 use per 30 minutes. This end, one can fix the thermistor to some kind of fan, heat sink or cooling system, (similar to that of the processor of the PC) to reduce the temperature quickly (<30 seconds) so it would work correctly next time. If not, the amount of current for subsequent degaussing might be severely reduced and not able to produce the required field due to the resistance being too high.

2.2. Inductive discharge.

One needs a way of producing a simple large current pulse, that will ring (under the natural effects of the inductance of the coil) to produce the de-gaussing effect. The basic operation of such a system is to charge a capacitor, then simply discharge the current into the coil, the transient will "ring" in the inductor and produce an AC current that will decrease exponentially. The capacitor will require a large DC voltage to be applied to it to charge it up quickly, then timing or a switch to discharge the current into the coil, a resistor would be used to limit the peak current / help set the q factor resonance frequency.

To demagnetise $\gamma$- $Fe_2O_3$ tape the initial field intensity has to be in the range of 400 Oe (32000 A/m). Based on the available geometry, the size of the degaussing coil is assumed to be 140mm in diameter and at least 60mm high. To minimise power consumption and cost of high power components the maximum current is set to 15A. In accordance with the safety regulations the minimum diameter of the allowed wire, that can be used for winding a degaussing coil is AWG16 ($1.5mm^2$, maximum current - 21A). Suitable wire can be ordered from RS catalogue (364-483). The number of turns is approximated using the equation valid for a solenoid type coil. A more precise estimation can be made when the geometry is determined exactly. Here n is a number of turns per meter. For field of 32000A/m and maximum current of 15 A, n = 130 turns / 60 mm or 7 layers x 19 turns per layer. The parameters of the coil are estimated as

$$\text{inductance} \quad L_{coil} \approx 5.8 \text{ mH.}$$

$$\text{resistance } R_{ul} = 13.3 \text{ } \Omega/Km, \quad R_{coil} = R_{ul}*2*\pi* R*N \approx 0.76 \text{ } \Omega$$

Since the L, R values are based on approximate estimations, it is advised to construct and measure coil parameters first before developing any electronics.

The following description is an example of the RLC Degausser circuit based on free oscillating RLC network. The circuit parameter are taken as estimated.

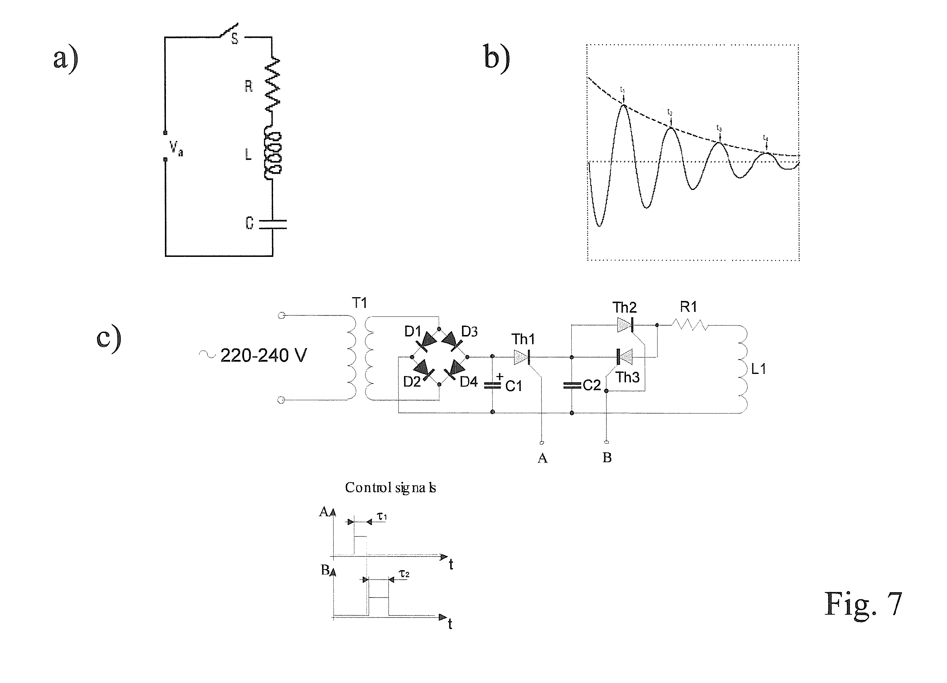

In the circuit shown in Fig. 7 a), an emf (an applied voltage Va) is connected across the series combination of a switch S, a resistor R, an inductor L, and a capacitor C. We are interested in determining how the current in the circuit varies as a function of time after the switch is closed. Applying Kirchhoff's second rule to the circuit shown in Fig. 7a) after the switch is closed gives:

$$V_R + V_L + V_C = V_a \tag{1}$$

The voltages across R, L, and C can be expressed in terms of the current I, its time rate of change dI/dt, and the charge q on the capacitor C:

$$V_R = IR, \quad V_L = I\frac{dL}{dt}, \quad V_C = \frac{q}{C} \text{ where } q = \frac{dI}{dt} \tag{2}$$

From (1) and (2) a single second order differential equation can be obtained with respect to time:

$$L\frac{d^2I}{dt^2} + R\frac{dI}{dt} + \frac{I}{C} + \frac{dV_a}{dt} = 0 \tag{3}$$

If $V_a$ is a DC voltage then and (3) has an exact solution in the form:

$$I = I_0 \cdot e^{-(R/2L)t} \sin\omega_0 t; \quad \omega_0 = \frac{1}{\sqrt{LC}}$$

The appearance of the damping factor $e^{-(R/2L)t}$ in (3) with the characteristic relaxation time $\tau = \dfrac{2L}{R}$, implies that the amplitude decays exponentially as shown in Fig. 7 b).

Again, the value of the resistor can be estimated only after coil will be constructed and parameters of the coil will be measured. Let's, for example, calculate damping time for estimated parameters, one then obtains:

$$\tau = \frac{2 \cdot 5.8 \cdot 10^{-3}}{0.76} = 15.26ms$$

Next, the construction of the degaussing circuit will be described (see Fig. 7c)). A parallel RLC circuit is more appropriate for degausser due to the construction of the switches and their control. The left portion of the circuit including: transformer T1, rectifier diode bridge (D1, D2, D3, D4) and smoothing capacitor C1, is a simple AC to DC converter, that brings voltage down to the required value. For the example above, the voltage from the transformer has to be 20 V with peak current capability of at least 20A (400W). After rectification and smoothing, this voltage will drop down to 15-16V. Assuming that the total load impedance is in the range of 1 $\Omega$, we will get desired 400 Oe magnetic field in the centre of the degaussing coil.

Capacitor C2 = 1$\mu$F in combination with inductance calculated above will give us oscillation frequency of approximately 2 KHz. Chosen frequency will give more then 30 cycles of oscillation for proper degaussing procedure.

The last part of the circuit contains Th1-Th3 elements, which are basically thyristor diodes (high power voltage controllable switches). We may suggest using MSS50 SCR modules (see RS catalogue No. 226-4852) for both switches (A and B). Control signals supplied to points A and B are shown below. Open intervals $\tau_1$ and $\tau_2$ has to be adjusted within some reasonable range, say $\tau_1$ = 100 ms and $\tau_2$ = 30 ms. When thyristor 1 is open, capacitor C2 will charge to the maximum value. Then thyristor 1 has to be closed and dual thyristor 2,3 can be opened. The energy stored in the C2 will discharge into inductor causing free oscillation with a result of generated decaying magnetic field. It is highly recommended not to open both switches at the same time; it may cause undesired SC, explosions, flying hot parts of the electrolytic capacitor and other unnecessary problems.

*Section 3: Magnetic properties of bistable microwires.*

Effect of stray fields produced by semi-hard magnetic substrate with a conditional magnetisation pattern. Selection of two types of microwires on a pre-magnetised magnetic tape.

3.1. Introductive comments

A micro wire comprises a metallic core and a coating formed from an insulating material, such as glass. The core has a diameter $d_m$, while the total diameter of the micro wire, i.e. core and the coating, is $D_w$. The metallic core typically has an amorphous and/or microcrystalline microstructure in order to achieve the desired magnetic properties, for example magnetic anisotropy and coercivity. The ratio of the metal core and glass coating thickness also affects the magnetic properties.

The microwires are manufactured by use of a modified Taylor-Ulitowski process, based on direct casting from the melt. In the process, an alloy droplet in a quantity of typically from 3 to 6 gm is delivered inside a glass tube held directly over suitable heating means, for example an inductor heater. The droplet is heated up to the melting point $T_m$ of the alloy at which temperature the glass softens and forms an envelope for the metal. Then, the metal is superheated and kept at a temperature $T_s = T_m + \Delta T$ for a time t. The molten alloy is then drawn together with the glass coating from the bottom of the tube and rapidly cooled by a cooling mechanism, for example water. Finally, the wire is wound up on a coil. The melting temperature $T_m$ of the alloy will typically fall in the range of from 1230 to 1400°C. The alloy is typically superheated from 10 to 300°C above its melting point.

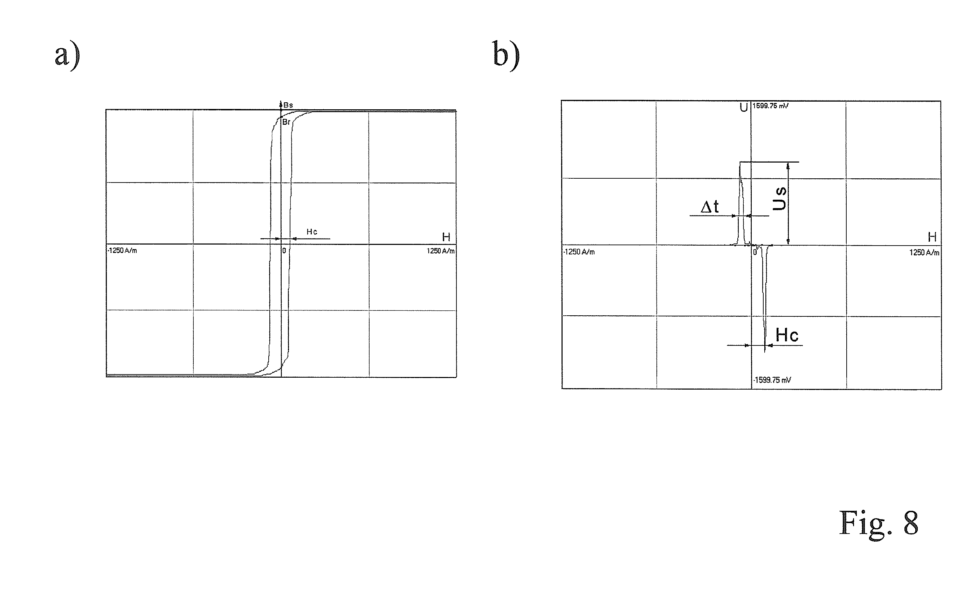

Upon exposure of the micro wire to an ac magnetic field (for example triangular or sinusoidal) whose field strength exceeds a predetermined threshold value, a voltage pulse is generated. For this signal to be readily detected and easily distinguished, it should ideally have a large amplitude and a short duration. A certain wire-family depending on composition and cooling rates, poses so-called bistable properties. Such a wire is characterized by an essentially rectangular magnetisation loop, as shown in Fig. 8a), showing the magnetisation loop of a bi-stable microwire

If the external magnetic field H applied in the axial direction is sufficiently large, the wire may become uniformly magnetised along its axis, reaching a saturation magnetisation $B_s$. As the external field is decreased, the magnetisation decreases a little, having a value of $B_r$ (remanence magnetisation) at H = 0. The ratio $B_r/B_s$ is slightly smaller than 1. For an ideal loop, the ratio $B_r/B_s$ = 1. Upon reversing the field direction, the magnetisation abruptly jumps reaching a negative saturation at some critical field $H_c$, which is referred to as the switching field. Such a magnetisation loop is important to obtain sharp voltage pulses, as shown in Fig. 8 b) showing the voltage pulse generated at remagnetisation of Co-based microwire.

The remagnetisation process starts when the external field reaches the value of the switching field $H_c$. At this switching field, the already existing closure domains at the wire ends break through the pinning sites and irreversibly move. This extremely fast change in magnetisation produces very sharp voltage pulses. In glass-coated Fe-based microwires, which can produce voltage peaks with the width smaller than 30 ms and the height is around 0.03 mV per turn (for 12 $\mu$m metallic core diameter). Furthermore, the characteristic critical length is about 10 mm. The switching field is in the range of 0.1-8 Oe (80-640A/m).

The induced voltage due to the rapid change in the magnetisation caused by the external magnetic field (any ac waveform field) may be characterized by its amplitude $U_s$ and its duration $\Delta t$. For practical applications, it is often desirable for the voltage peak to be large and the pulse duration to be short. This requires not only that $B_r/B_s$ is 1 or almost 1, but also small fluctuations in the switching field. The ability to alter the value of the switching field is also important. A pick up coil of a certain type is a principle element of an external detector. It can be mounted tightly on the wire, or it can have larger diameter (up to 0.5 m for remote sensing) so that the wire is inserted inside the detector, or the wire can be located at one side of the detector in the case of a flat plane reader.

There are essentially four properties of micro wires which characterise their switching behaviour and are relevant for their application in magnetic markers and/or labels.

A: The magnitude (amplitude) of the voltage pulse at remagnetisation (in arbitrary units), which is determined as the ratio (A=U/V) of the voltage signal U in an electronic circuit used to the volume V of the metallic core. The parameter A may be represented as $A = A_{in}[KN/(S_c - S_m)l]dI/dt$, where $A_{in}$ is the intrinsic wire parameter proportional to the rate of change in the magnetization, K is the amplifying parameter of the measuring circuit used, N is the number of turns of the measuring coil $S_c$ is its cross-section, $S_m$ is the sample cross-section, 1 is the sample length. dI/dt is the rate of change in the current of the magnetising coil. A has arbitrary units.

B: The voltage pulse duration ($\mu$_sec).

C: The switching field (A/m), which corresponds to the coercivity of the micro wire.

D: The fluctuation of the switching field ($\mu$sec) which corresponds to the fluctuations in the position of the voltage pulse peak

For any particular labelling application, the method of selecting an alloy for a microwire of the type capable of generating a well distinguished voltage pulse in a detector when the micro wire is exposed to an alternating magnetic field is important. Typically, required magnetic alloys which are Fe-Co-based with such additives as Mn, Cr and Be are designed by varying the concentrations of one or more of the elements within certain limits. As the content of Fe is increased, the magnetostrictive constant monotonically increases going through zero at $P_{Fe}$ = 4-4.5%. This allows a magnetic system with the coercivity varying within a wide field region to be designed. To produce a microwire having a metallic core in an amorphous or microcrystalline state, the elements responsible for amorphisation such as Si, B, Ge are used. Their total content should not exceed a certain limit to avoid relaxation of properties with time.

3.2. Effect of magnetic substrate on the wire switching characteristics

The magnetic structure of the microwire is proposed to be conditionally modified by local stray fields induced by a controlling semi-hard magnetic layer attached to the wire and holding a certain magnetic pattern. Then the voltage response waveform from the microwire will be affected by the magnetic state of the controlling microwire and the excitation conditions provided by the detection technique. This conditional behaviour can be used for both authentication and deactivation. The magnetic state of the controlling layer is recorded during the marker fabrication.

There are numerous possible semi-hard magnetic media, which can be used for the controlling/deactivation layer. This is a known art in the area of magnetic recording and deactivatable EAS markers. The layer can be made from an alloy of iron and chromium that is presently commercially available from Arnold Engineering of Marengo, under the designation Arnokrome 3, which has a coercivity of about 200 Oe. To make the labels as cheap as possible, ordinary low — cost audiotapes can be used. These typically consist of a thin plastic base material, and bonded to this base is a coating of ferricoxide ($Fe_2O_3$) powder. The oxide is normally mixed with a binder. The coercive force of reel-to-reel audio tape of gamma- $Fe_2O_3$ is typically between 270-350 Oe. Additions of Co would increase the coercivity. $CrO_2$ tapes also have an increased coercivity and would be less suitable as a controlling/deactivation layer in RVM applications.

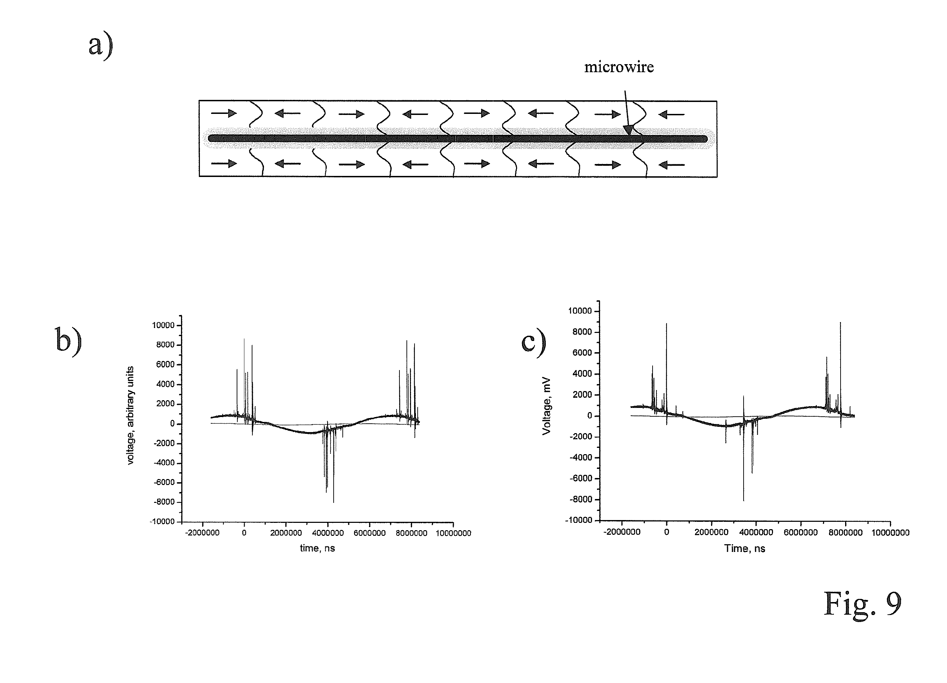

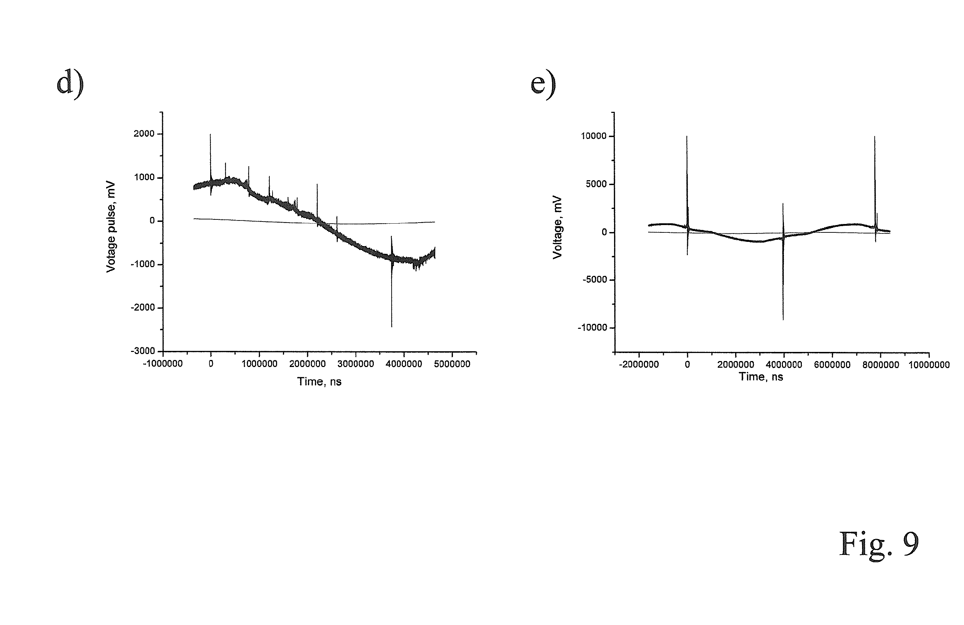

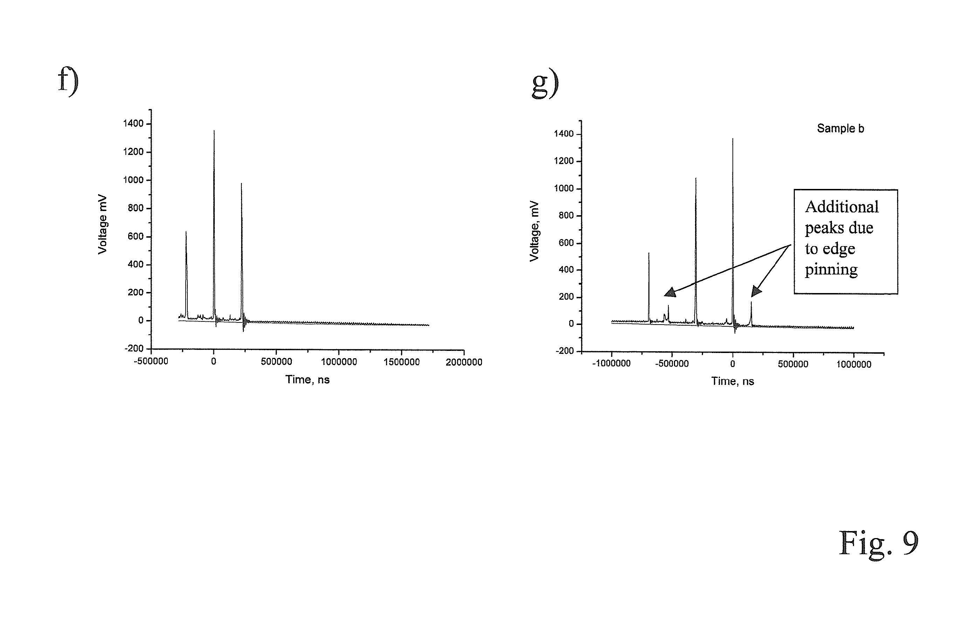

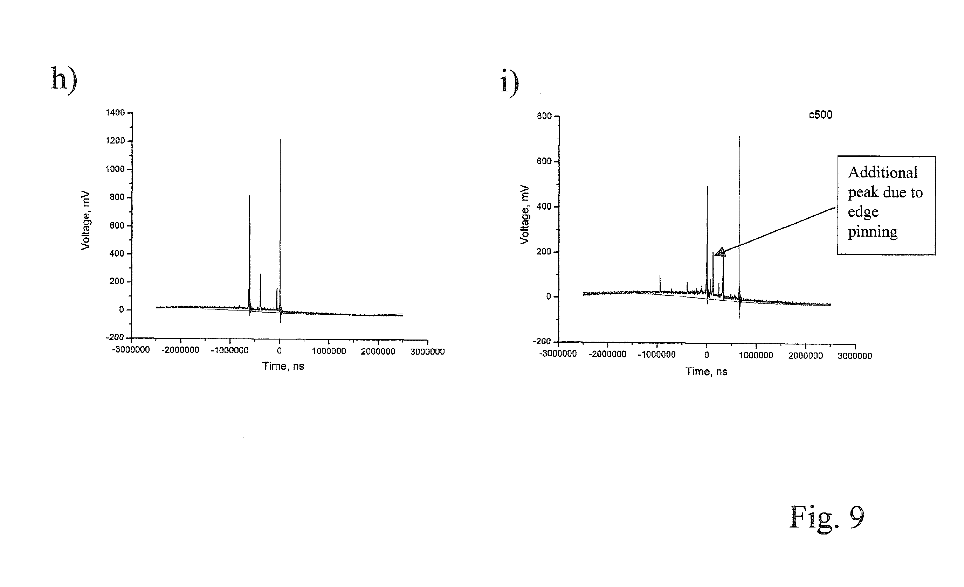

A specific magnetic pattern can be introduced into a magnetic tape substrate using an inductive writing head and controlling the produced magnetic pattern with MR read head. To realise continuous writing and achieve good head to tape contact, a simple audio tape cassette mechanism can be used (see Section 5 on wire encoding methods). Fig. 9a) shows a magnetic marker comprising microwire attached to the recorded tape containing face-to face magnetisation regions of 1-4 mm long. If it is subjected to a sinusoidal magnetic field it produces a multiple-pulse signal during one cycle of the magnetisation change, as shown in Fig.9b) (Voltage signal of a single microwire of 2 cm long having coercivity of 60A/m on audio tape substrate having 4mm long magnetic transition areas) and 9c) (Voltage signal of a single microwire of 2 cm long having coercivity of 35 A/m on audio tape substrate having 4mm long magnetic transition areas) where the response for two kinds of microwires with the coercivity of 60 A/m and 35 A/m are given. In this case, a number of reverse domains exist between the pinning sites along the wire length, associated with the stray fields from the tape. They will propagate when the driving field exceeds the local stray field.

As can be seen, the obtained voltage waveforms are different in two cases, but after averaging over several magnetisation cycles the waveform has two characteristic pulses. However, for a microwire having very small coercivity of less than 14A/m, the effect of magnetic substrate resulted in degradation of the bistable behaviour and hence, the wires with very small coercivity are not suitable for this application (see Fig. 9d, Voltage signal of a single microwire of 2 cm long having coercivity of 14 A/m on audio tape substrate having 4mm long magnetic transition areas).

The extra pulses in the signal introduced by the tape can be removed by a degaussing process in the reading device after which only the main wire pulse shown in Fig. 9e) (Voltage signal of a single microwire of 2 cm long having coercivity of 30 A/m on audio tape substrate after deactivation - originally had 4mm long magnetic transition areas) can be detected (see Section 2 on deactivation).

Depending on the domain pattern on the tape, the voltage signal of the combined system will be modified. We have chosen a pattern of 5 mm long which results in 3-4 pulse quite stable voltage waveform. We have selected two types of microwires (named N2 and N3) having coercivity of about 35A/m and about 60 A/m, respectively. For N2: the core diameter is 19.8 $\mu$m, the total diameter is 28.8 $\mu$m; for N3: the core diameter is 20.5 $\mu$m, the total diameter is 33.5 mm. Here is the summary of the obtained results.

Fig. 9f): N3 wire (coercivity about 60A/m) on tape having 5mm domain pattern along 2mm width.

We have seen some variation in the induced voltage waveform as seen in the next diagram depending on the edge domain conditions, meaning, that it will be probably needed to control the chopping of the wire/tape with respect to the transition magnetisation positions on the tape. Alternatively, additional pulses created by the edge pinning site should be excluded from recognition process. This effect is more pronounced for lower coercivity wire.

Fig. 9g): N3 wire (coercivity about 60A/m) on tape having 5mm domain pattern along 2mm width. Sample cut is made in a different place.

Fig. 9h): N2 wire (coercivity about 30A/m) on tape having 5mm domain pattern along 2mm width.

Fig. 9i): N2 wire (coercivity about 30A/m) on tape having 5mm domain pattern along 2mm width. Sample cut is made in a different place.

Yet, three main pulses have changed little.

Therefore, the 5mm magnetic pattern on the tape can be considered for realistic applications.

*Section 4: Experimental setup*

For investigating switching parameters of magnetic tags comprising microwire and semi-hard magnetic substrate as $\gamma$-$Fe_2O_3$ tape.

4.1. Parameters of the Designed Coils

Two types of coils are required to be designed for the hysteresis loop tracer, the driving coils based on a Helmholtz coil system and the pickup coils based on a solenoid system (see also Fig. 4b).

a. Helmholtz Coils

Helmholtz coils provide a method of producing a large volume of uniform magnetic field strength, this will be required to ensure that both pickup coils experience identical field conditions. A Helmholtz coil system dimensions must be carefully calculated to ensure that this volume is of the right size and uniformity, and the number of turns provides a high enough A/m field strength.

Calculation of the field at the centre of the Helmholtz system can be given by the equation below, providing the assumption of the dimensions above are made.

$$B = \frac{32\pi NI}{5\sqrt{5}R} \text{ x } 10^{-7} \text{ Tesla, where R is the radius of the coils.}$$

The Helmholtz coils of 75 mm radius and N turn was made. They were tested by measuring the coil inductance at 100Hz using the WayneKerr high performance inductance measurement system as 138.10mH with a complex impendence of 87.760$\Omega$, and they had a transfer function of 1A to 45.14Oe (3611 A/m) with a radius of 75mm.

| mA | Oe | Average |
|---|---|---|
| 300 | 14.21 | 0.047367 |
| 260 | 12.75 | 0.049038 |
| 240 | 11.16 | 0.0465 |
| 210 | 9.7 | 0.04619 |
| 180 | 8.15 | 0.045278 |
| 150 | 6.74 | 0.044933 |
| 110 | 5.12 | 0.046545 |
| 80 | 3.65 | 0.045625 |
| 50 | 2.17 | 0.0434 |
| 20 | 0.73 | 0.0365 |

b. Pickup Coils

The critical factor of the pickup coils is the trade off between the number of turns to produce a large output signal and the magnitude of the inductance. The inductance of the pickup coils will produce a ringing current with exponential decay, when any signal with a transient of frequency over a certain critical value specified by the overall resonance of the inductance capacitance and resistance of the pickup coil. A critical value of inductance was evaluated experimentally after winding a number of test pickup coils with increasing inductances.

Test spindles were manufactured of 80mm length with an internal diameter of 10mm and external 200m, firstly winding 175 turns on the spindle. Coil matching was slightly different with one being 137.2uH and the other as 129.40uH at 100Hz. Therefore a slight imbalance was seen. The low number of windings made the pickup signal very small even after amplification at around +/- 200mV, however no ringing was observed, only slight ringing decay on the falling transient edge.

This then gave the lower or ballpark value of inductance that causes no ringing. The pickup coils were rewound with thinner diameter wire of 0.1mm and achieved around 400 turns. The inductance in the coils was 674.5uH and 684uH respectively. This imbalance was evident on the signal, but the output increased to 400mV (expected) there was still no ringing on the pulse wave form, so this new inductance value can be taken as the new minimum. The coils were then precisely balanced to 666uH each including connection leads, imbalance in the coils was reduced to less than 10mV after a gain of 100x.

To get the best pickup signal without increasing the number of turns it is necessary to reduce the distance between the sample and the coil. The large central air gap on spindle design must be reduced to as small as possible.

Therefore, the final pickup solenoids for characterising the wire on tape samples will have a length of 30mm, height less than 5mm and width around internal or air gap around 10mm. This design will be a rectangle made of epoxy PCB with no copper present. This will increase the output of the coil making the signal detection better. Inductance will also be made slightly larger to ~ 1mH to maximise the output without generating ringing by using still thinner wire.

4.2 Signal generation

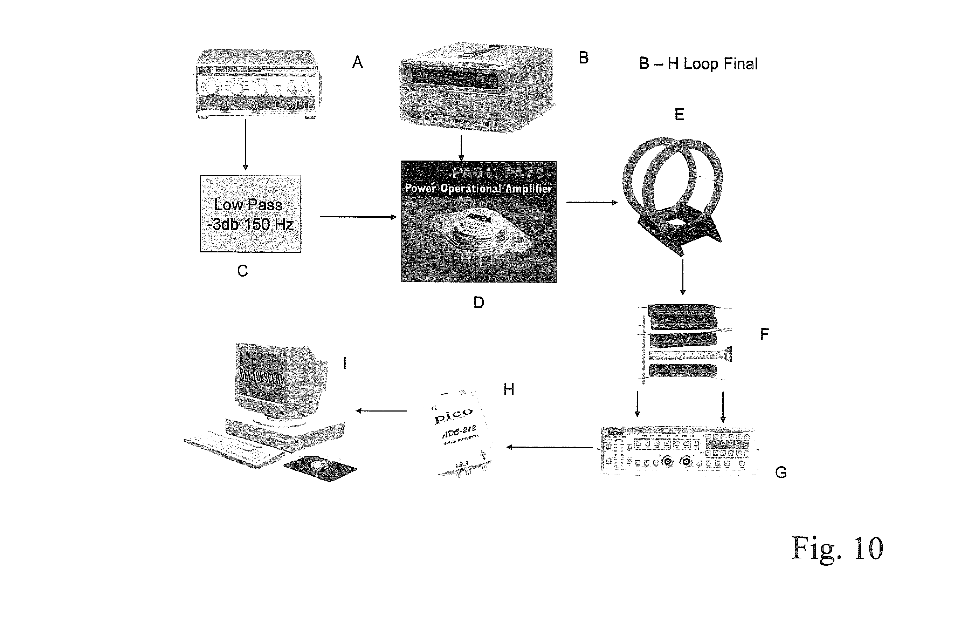

The driving signal to the Helmholtz coils consists of two parts, sine wave generation and power amplification, which are covered by A - D in the system diagram as displayed in Fig. 10.

The elements indicated with capital letters in figure 10 have the following characteristics:

A   TTI TG210 signal generator of standard quality, it will produce a 135 Hz sine wave at 20V pk to pk or 10V max. 10V will be used as the maximum input voltage to the power op-amp. It will require low pass filtering to remove harmonics at around 200Hz, 400Hz which will cause noise on the driving signal.

B   A GW 3030D power supply capable of providing two independent 30V 3A supplies for power op amp. This will be the power supply for the op amp as it will run at +/- 15V and draw around +/- 1.5 max. This is it is well within the specification of the power supply for semi-continuous use.

C   2 stage butterworth low pass filter to remove harmonics present in the signal source, set at 150Hz to allow a clear pass band at 135Hz

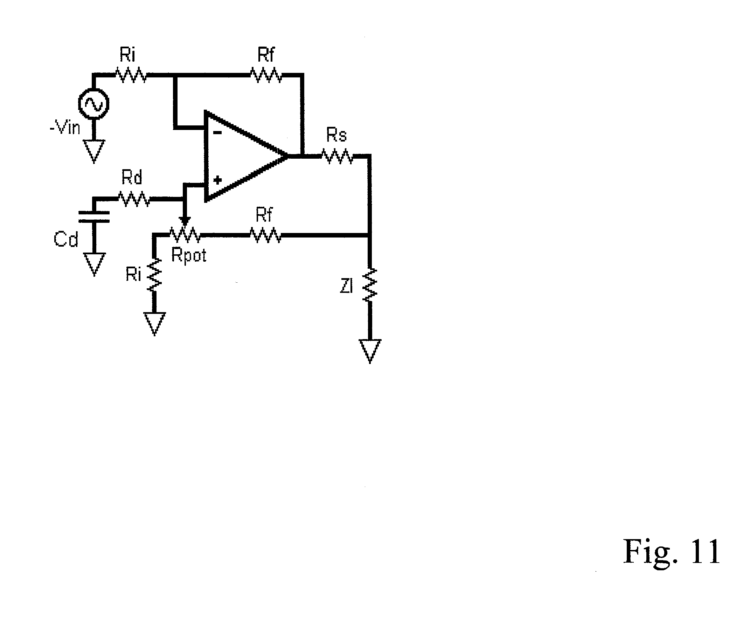

D   A PA01 Apex microtech power op-amp. Specialist op amp designed to drive inductive and capacitive loads (complex loads). Designed to produce a transfer function of 10V to 1A in the Helmholtz coil system. The circuit is detailed in Figure 11.

The voltage over Rs in Fig. 11 is monitored in the feedback loop to ensure that any changes in Z1 does not affect the voltage to current transfer function defined by the overall feedback loop.

Rd and Cd are used as compensation for the possible oscillation effect caused by the complex load. This limits the frequency response of the system. For the inductance of the existing Helmholtz coil system the -3db point is 300Hz which works as an additional filter to remove driving field harmonics.

4.3. Detection electronics

For detection a Differential amplifier LeCroy (DA1822A) with adjustable gain, offset, LP an HP filters has been used. Analogue signal from the output from the Differential Amplifier has been digitized and transferred to the PC by means of high resolution ADC converter from PicoTech (PICO-212/100). In the experiments signals were analysed with maximum possible time and amplitude resolution in order to understand completely magnetisation and biasing processes and develop algorithm for detection and recognition of complex signals produced by wire on the tape.

**LIST OF REFERENCE NUMERALS**

1   motor for output flap 105
2   mounting/drive for turntable 107
3   drive/gearing/worm gearing for turntable 107
4   Housing
5   bearing for turntable 107
6   vertical screw
7   traveller on vertical screw

| 8 | guiding |
|---|---|
| 9 | bearings for vertical screw |
| 10 | cylindrical coil unit |
| 11 | upper threaded portion of traveller |
| 12 | positioners |
| 14 | wall of tube 110 |

| 66 | adjustments for a 12 |
|---|---|
| 68 | connecting element for upper and lower threaded portion of traveller |
| 69 | fixation of bearing 9 |
| 70 | guiding pillar |
| 72 | pillar for positioners |
| 73 | fixation of opening plate |
| 75 | bottom part of 110 |
| 101 | upper unit |
| 102 | lower unit |
| 103 | cover on input opening |
| 104 | display |
| 105 | output flap |
| 106 | cavity for item with refundable deposit |
| 107 | turntable for item with refundable deposit |
| 108 | input opening for item with refundable deposit |
| 109 | output slot for ticket/money |
| 110 | tube |
| 111 | sorting flap |
| 112 | rotation axis of 111 |
| 113 | wheels |
| 114 | motor/drive unit/driving belt for 107 |
| 115 | pillar |
| 116 | lever for flap 111 |
| 117 | abutment for a flap 111 |
| 118 | area for optical detectors |

## Claims

1. Device (101, 102) for identification and/or verification and/or sorting and/or refunding of items with refundable deposit such as glass or plastic bottles, cans and the like, comprising an opening (118) into which the item can be inserted, first means (10, 118) for identification and/or verification of the inserted item, wherein these first means are based on magnetic (10), electromagnetic and/or optical (118) methods, and comprising second means for either indicating the amount of refund or for direct refund of money,
**characterised in that**
the item can be introduced through the opening (118) into a substantially vertical, tube like cavity (106), and **in that** third means (107) are provided allowing to rotate the item along a principal axis of the tube like cavity (106) in at least one step of the identification and/or verification process.

2. Device according to claim 1, **characterised in that** the tube like cavity (106) is tilted from the vertical direction by no more of 40° or 30°, preferentially by no more than 5°.

3. Device according to any of the preceding claims, **characterised in that** the first means comprise at least one optical detection device (118), preferentially in the form of at least one optical barcode reader, and at the same time comprise at least one magnetic or electromagnetic detection device (10), preferentially in the form of a radio frequency or magnetic excitation in combination with a radio frequency or magnetic or electromagnetic detection.

4. Device according to claim 3, **characterised in that** the magnetic or electromagnetic detection device (10) can be used for detecting the refund status of the item as well as for amending the refund status of the item, the latter preferentially **in that** either the radio frequency resonance behaviour or the magnetic behaviour of an identification tag on the item can be modified while the item is in the tube like cavity (106).

**5.** Device according to any of the preceding claims, **characterised in that** the first means are mounted in the device such as to be travelling in a direction parallel to the principal axis of the tube like cavity (106) for scanning the item, wherein preferentially they can be moved by at least 1 - 400, preferably 100 - 300 mm in said direction.

**6.** Device according to any of claims 3 or 4 and claim 5, **characterised in that** the optical detection device (118) as well as the magnetic or electromagnetic detection device (10), the latter comprising at least one coil around the tube like cavity (106), are mounted on a common unit which can be moved in a direction parallel to the principal axis of the tube like cavity.

**7.** Device according to any of the preceding claims, **characterised in that** the first means comprise at least one coil type winding around the tube like cavity (106).

**8.** Device according to claim 7, **characterised in that** the first means comprise at least one driving coil and at least one detection coil, wherein preferably a stacked pair of spaced driving coils is provided in the gap of which the detection coil is arranged symmetrically with its axis coinciding with the axis of the pair of driving coils, preferentially **characterised in that** the first means comprise two stacked pairs of driving coils connected in series, in the gap of each of which a detection coil is arranged symmetrically with its axis coinciding with the axis of the driving coils.

**9.** Device according to claim 8, **characterised in that** the tube like cavity has a radius which is approximately equal to the spacing along the magnetic axis of the stack formed by the pair of driving coils and preferentially the enclosed detection coil has a height in the same range, wherein preferentially the tube like cavity has a radius of 40-70 mm.

**10.** Device according to any of claims 7-8, **characterised in that** the driving coil can also be used as degaussing coil.

**11.** Device according to any of claims 7-10, **characterised in that** digital and/or electronic amplification and filtering means are provided for the signals detected in the detection coil, wherein preferentially the measurement in the detection coils is provided as a differential measurement of the signals received in the pair of detection coils.

**12.** Device according to any of the preceding claims, **characterised in that** the third means are provided as a rotatably mounted turntable (107), preferably with a diameter substantially identical to the diameter of the tube like cavity (106).

**13.** Device according to claim 12, **characterised in that** the turntable (107) is mounted such that for removal of the item from the tube like cavity (106) it can be moved in a substantially sideways motion such that the tube like cavity (106) is opened towards the bottom side and the item allowed to drop into a lower unit (102) of the device, either by means of gravity or by a motion initiated mechanically or by air pressure.

**14.** Device according to any of the preceding claims, **characterised in that** it comprises an upper part (101) for identification and/or verification and/or refunding as well as a lower part (102) for sorting (111), wherein the item is transported from the upper part to the lower part by means of gravity.

**15.** Method for the identification and/ for verification and/or refunding of items with refundable deposit, **characterised in that** the item with refundable deposit is
inserted into through an opening (118) into a tube like, substantially vertical cavity (106) of the device,
the admissibility to refunding is checked by electromagnetic or magnetic interaction with a tag on the item by first means (10),
the identification and/or verification of the inserted item is checked by the first means using optical methods, preferentially by barcode reading, whereby the item is rotated along the main axis of the tube like cavity (106), preferentially with a frequency of rotation in the range of 1 - 100 rotations per minute, preferably in the range of 50 rotations per minute,
and subsequently second means are either indicating, transmitting or printing out the amount of refund or in case of direct refund outputting the corresponding amount of money.

**16.** Method according to claim 15, **characterised in that** after having checked the admissibility to refunding, in the event that admissibility to refunding is acknowledged, the tag is modified by electromagnetic or magnetic interaction such as to mark the item as having been refunded, wherein preferentially said modification is carried out by either applying a strong electromagnetic field for destruction of a resonance circuit in the tag or for amending the magnetic properties in the tag.

**17.** Method according to any of the claims 15 or 16, **characterised in that** in the step of identification and/or verification of the inserted item the first means are moved along the principal axis of the tube like cavity (106) in a scanning motion.

**18.** Method according to any of the claims 15-17, **characterised in that** a device according to one of the claims 1-14 is used.

Fig. 1

a)

Fig. 2

b)

Fig. 2

20

Dualband GSM Antenna

Coaxial Connection

RS232

2x16 Blue Display

Main Power Supply

220 Vac Inlet

24VDC

GSM Modem

uController

1GB Memory Card

RS232

Thermal Printer

3xRS232

Excitation

Measure

Demagnetization

Push Button + Lamp: OK

Push Button + Lamp: HELP

Push Button + Lamp: CANCEL

3 x Serial Interface

3 x CCD Barcode Reader

3 x DC Motors

7 x Proximity Sensors

Magnetic Sensor

Fig. 3

a)

b)

50mm

10mm

50mm

50mm

2 pairs of driving coils,
connected in series,
1mm ecw,
100 turns over 10 layers

Magnetic label

Detection coils, 0.25 mm ecw,
200 turns over 1 layer

Fig. 4

EP 1 755 090 A1

Fig. 5

Fig. 5

c) Digital switch, Output, Comparators, $V_{dd}$, $R_N$, Signal from amplification and filtering stage, Magnetic Field measured by means of $R_I$

d) Applied field, [Oe]; Output of the selector circuit, [V]; Time, [μs]

a)

Case

B    Coil PTC    C

Heater PTC

$V_N$

A

Degaussing
coil

b)

EP 1 755 090 A1

Fig. 6

Fig. 7

EP 1 755 090 A1

Fig. 8

EP 1 755 090 A1

Fig. 9

Fig. 9

f)

g)

Fig. 9

EP 1 755 090 A1

h)

i)

Additional
peak due to
edge
pinning

Fig. 9

Fig. 10

EP 1 755 090 A1

Fig. 11

**European Patent Office**

## EUROPEAN SEARCH REPORT

Application Number

EP 05 10 7488

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 196 22 183 A1 (RUDOLPH, KLAUS, 49205 HASBERGEN, DE) 4 December 1997 (1997-12-04) | 1,2,5,6, 12-14,17 | G07F7/00 |
| Y | * abstract * | 3,4, 7-11,15, 16,18 | |
| X | DE 103 05 150 A1 (HOGL, PETER) 26 August 2004 (2004-08-26) | 1,12 | |
| A | * paragraph [0022] - paragraph [0039] * | 5,6,17 | |
| Y | EP 1 515 280 A (EUDEPOSIT AG) 16 March 2005 (2005-03-16) | 3,4, 7-11,15, 16,18 | |
| | * paragraph [0017] - paragraph [0029]; figures 1,2 * | | |
| A | DE 103 02 853 A1 (KABELLA, KLAUS) 5 August 2004 (2004-08-05) * paragraph [0004] - paragraph [0026] * | 1,3,4 | |
| A | DE 100 61 462 A1 (PROKENT AG) 27 June 2002 (2002-06-27) * abstract; figure 3 * * paragraphs [0021], [0022] * | 1,5 | TECHNICAL FIELDS SEARCHED (IPC) G07F |
| A | US 2004/195306 A1 (CARLSON SVEN-ERIK) 7 October 2004 (2004-10-07) * page 1, paragraph 40 - paragraph 52; figure 1 * | 1 | |

The present search report has been drawn up for all claims

| Place of search | Date of completion of the search | Examiner |
|---|---|---|
| Munich | 7 February 2006 | Hopper, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 10 7488

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2006

| Patent document cited in search report | | Publication date | Patent family member(s) | | Publication date |
|---|---|---|---|---|---|
| DE 19622183 | A1 | 04-12-1997 | NONE | | |
| DE 10305150 | A1 | 26-08-2004 | NONE | | |
| EP 1515280 | A | 16-03-2005 | NONE | | |
| DE 10302853 | A1 | 05-08-2004 | NONE | | |
| DE 10061462 | A1 | 27-06-2002 | NONE | | |
| US 2004195306 | A1 | 07-10-2004 | AT | 295587 T | 15-05-2005 |
| | | | WO | 02091313 A1 | 14-11-2002 |
| | | | DE | 50203090 D1 | 16-06-2005 |
| | | | EP | 1256910 A1 | 13-11-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02082475 A